(19) Europäisches Patentamt
European Patent Office
Office européen des brevets

(11) EP 1 865 502 A2

(12) **EUROPEAN PATENT APPLICATION**

(43) Date of publication:
**12.12.2007 Bulletin 2007/50**

(51) Int Cl.:
***G11B 7/0045*** *(2006.01)* ***G11B 7/245*** *(2006.01)*
***G11B 7/257*** *(2006.01)*

(21) Application number: **07252276.6**

(22) Date of filing: **06.06.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **08.06.2006 JP 2006159500**

(71) Applicant: **Kabushiki Kaisha Toshiba**
**Minato-ku, Tokyo 105-8001 (JP)**

(72) Inventors:
- **Matsumoto, Kazuki**
  **c/o Toshiba Corporation**
  **Minato-ku**
  **Tokyo (JP)**
- **Sasao, Norikatsu**
  **c/o Toshiba Corporation**
  **Minato-ku**
  **Tokyo (JP)**
- **Hayase, Rumiko**
  **c/o Toshiba Corporation**
  **Minato-ku**
  **Tokyo (JP)**
- **Hirao, Akiko**
  **c/o Toshiba Corporation**
  **Minato-ku**
  **Tokyo (JP)**
- **Kamikawa, Takahiro**
  **c/o Toshiba Corporation**
  **Minato-ku**
  **Tokyo (JP)**

(74) Representative: **Granleese, Rhian Jane**
**Marks & Clerk**
**90 Long Acre**
**London WC2E 9RA (GB)**

(54) **Optical recording medium and recording method thereof**

(57) An optical recording medium includes: a recording layer (3) containing a photopolymerization initiator and a photopolymerization compound; and a pigment that generates light through a multiphoton absorption process.

FIG. 1

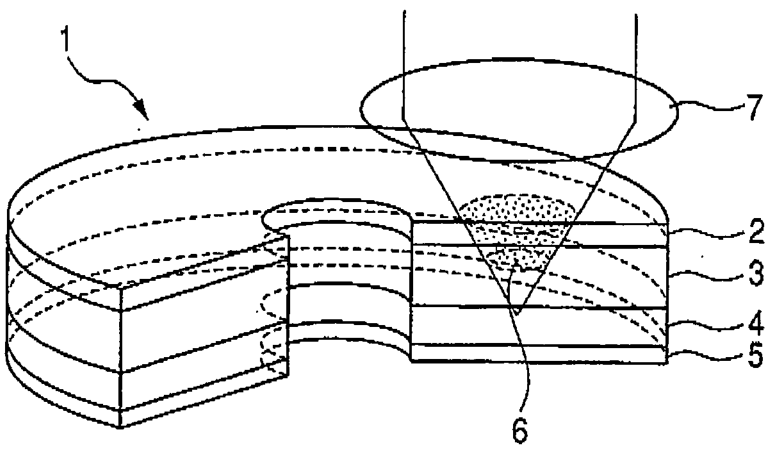


EP 1 865 502 A2

Printed by Jouve, 75001 PARIS (FR)

**Description**

CROSS-REFERENCE TO RELATED APPLICATIONS

This application is based upon and claims the benefit of priority from Japanese Patent Application No. 2006-159500, filed on June 8, 2006, the entire contents of which are incorporated herein by reference.

BACKGROUND

1. Field

The present invention relates to an optical recording medium that employs a polymerization reaction induced by optical excitation and applied for holography, especially for digital volume holography, and a recording method therefor.

2. Description of Related Art

An optical recording apparatus is provided as an information recording apparatus that can record a large volume of data, such as high-density image data. Magnetooptical information recording apparatus, optical phase change information recording apparatus, or CD-R drives have been put to practical use as optical information recording apparatus. However, there has been a constantly growing demand for optical recording media having greater recording capacities. In an effort to provide the high capacity optical data recording that would satisfy this demand, an optical information recording apparatus that employs holography, especially digital volume holography, has been proposed.

Generally, an optical recording/reproduction apparatus that employs holography uses light that is superior in coherence and allows information light and reference light to interfere with each other within an optical recording medium, and records the information as interference fringes. The information light provides information as a two-dimensional pattern. For the reproduction of information, the recorded interference fringes are irradiated only with reference light, and the information recorded as a diffraction image is extracted as a two-dimensional pattern from the interference fringes. Especially, for an optical recording/reproduction apparatus that employs digital volume holography, interference fringes are recorded three-dimensionally by positively employing the direction of thickness of the optical recording medium. Thus, the diffraction efficiency can be improved, the multiplexed recording of information is enabled in the same area of the optical recording medium, and the recording capacity can be increased.

A photopolymer, formed through a polymerization reaction produced by optical excitation, is a recording medium appropriate for optical recording that employs holography. The photopolymer mainly contains a photopolymerization compound (of small molecules), a photopolymerization initiator for initiating a polymerization reaction, and a macromolecule for holding a volume of joined small molecules (see JP-A 11-352303 (KOKAI)). The photopolymerization initiator is excited using a portion of a high intensity recording light, and the excited photopolymerization initiator polymerizes the nearby photopolymerization compound. As a result, a recording mechanism is obtained such that the distribution of a recording light intensity is recorded as a density distribution or a refractive index distribution.

The polymerization of the photopolymerization compound contained in the photopolymer progresses chainlike once the polymerization reaction is initiated. Therefore, as a characteristic, compared with the number of photons absorbed by the photopolymerization initiator, the number of occurrences of polymerization reactions can be increased, and superior sensitivity can be obtained. On the other hand, the photopolymerization compound is chemically unstable. Therefore, before recording is begun, a polymerization reaction may be inadvertently initiated through thermal excitation or by light other than a recording light (e.g., room illumination), and an unintentional polymerization process proceed chainlike through the photopolymer, adversely affecting the service life of a shell.

Therefore, in order to prevent such an unintentional chainlike polymerization reaction, a small amount of a polymerization inhibitor may be added to the photopolymer. Instead, during the ..preparation of the photopolymer, an impurity such as oxygen may be intentionally mixed in for impeding any undesirable polymerization reaction and prevent the deterioration of a recording function such as sensitivity.

When a photopolymer prepared in this manner containing either a polymerization inhibitor or an impurity for impeding a polymerization reaction is employed as a holographic recording medium, generally, before the holographic recording process is begun, a pre-recording optical process is performed to deactivate the polymerization inhibitor or the impurity.

An appropriate photopolymer for holographic optical recording contains a large amount of a polymerization initiator and a huge number of small molecules. Thus, there have been cases where after the recording of information has been completed, large residual amounts of these components, for which polymerization has not been accomplished, remain in the photopolymer. As described above, recording is performed by inducing a chainlike polymerization reaction in the photopolymer. Therefore, when unprocessed components are still present after all information for a hologram has been recorded, the chainlike reaction process can continue, which causes unduly chainlike reaction with time and deteriorates the recording. As means for resolving this problem, a post-recording optical process is generally employed.

In case where a recording LD (laser diode) is used as a light source for a pre-recording and post-recording

optical process, since the coherence of such a light source is superior, a noise hologram is produced within the recording medium due to interference by a weak scattering on the surface of the recording medium. As a result, the number of errors is increased. Therefore, it is preferable that a low coherence LED (a light emitting diode) is employed for the post-recording optical process. However, when not only a recording LD but also a light source having a low coherence must be mounted for the pre-recording and post-recording optical processes, the size of the optical recording/reproduction apparatus would be increased, and the apparatus would be become complicated.

## SUMMARY

An object of the present invention is to provide an optical recording medium capable of reducing the number of errors, and a recording method therefor.

According to a first aspect of the invention, there is provided an optical recording medium including: a recording layer containing a photopolymerization initiator and a photopolymerization compound; and a pigment that generates light through a multiphoton absorption process.

According to a second aspect of the invention, there is provided an optical recording method including: emitting a red laser to irradiate an optical recording medium at least one of before and after recording is performed, wherein the optical recording medium includes a recording layer containing a photopolymerization initiator and a photopolymerization compound, and a pigment that generates light through a multiphoton absorption process.

## BRIEF DESCRIPTION OF THE DRAWINGS

Fig. 1 is a schematic diagram showing a disk-shaped optical recording medium that is employed for reflection coaxial interferometry, and a neighbor optical system;

Fig. 2 is a schematic diagram showing the arrangement of an optical information recording/reproduction apparatus that employs the coaxial interferometry;

Fig. 3 is a diagram showing a modulation pattern displayed on a reflection space light modulator during recording;

Fig. 4 is a diagram showing a modulation pattern displayed on the reflection space light modulator during reproduction;

Fig. 5 is a block diagram showing a circuit for detecting a focusing error signal and a tracking error signal based on the output of a quadripartite photodetector;

Fig. 6 is a diagram showing the general configuration of the optical information recording/reproduction apparatus;

Fig. 7 is a schematic diagram showing an optical recording medium employed for the transmission of coaxial interferometry;

Fig. 8 is a schematic diagram showing the arrangement of an optical information recording/reproduction apparatus that employs the transmission coaxial interferometry;

Fig. 9 is a schematic diagram showing an optical recording medium, employed for reflection coaxial interferometry, that includes a dichroic reflecting layer;

Fig. 10 is a schematic diagram showing the arrangement of an optical information recording/reproduction apparatus that employs transmission two-beam interferometry;

Fig. 11 is a schematic diagram showing a mechanism according to the present embodiment for a polymerization reaction due to two-photon absorption; and

Fig. 12 is a schematic diagram showing a mechanism generally employed for a polymerization reaction due to two-photon absorption.

## DESCRIPTION

The embodiments of the present invention will now be described with reference to the drawings. The same reference numerals are provided for a structure employed in common for these embodiments, and no further explanation for the structure will be given. Further, schematic diagrams are provided for an explanation of the embodiments and to support an understanding of the embodiments. The shapes, sizes and the ratios of the components in the diagrams may differ from those of an actual apparatus, and their designs can be changed as needed by referring to the following explanation.

(Overview of the present invention)

With reference to Figs. 10 and 11, an overview of the embodiment will be described by employing a case wherein a two-photon absorbing pigment is used.

Fig. 11 is a schematic diagram showing a mechanism according to this embodiment for a polymerization reaction produced by two-photon absorption.

As shown in Fig. 11, first, a two-photon absorbing pigment absorbs two photons of light (hereinafter referred

to as process light), used during an optical process performed before and after recording, and is excited to a high energy state (two-photon excitation). Then, the two-photon absorbing pigment generates fluorescence or phosphorescence. The wavelength of this fluorescence or phosphorescence is about half that of the process light. A high-output semiconductor laser beam used for a conventional optical disk, such as a DVD or a CD, is preferable as the process light. For a GaAlInP type semiconductor laser used for a CD, oscillation of a wavelength of about 750 to 850 nm can be designed in. Thus, when the wavelength of a process light is, for example, 620 to 850 nm (red to infrared wavelength), the wavelength of fluorescence or phosphorescence is 310 to 425 nm (ultraviolet to blue wavelength). When light generated by the two-photon absorbing pigment is absorbed by the polymerization initiator, excitation occurs, and a radical is generated. By employing the generated radical, small molecules that did not react during a hologram recording are polymerized and consumed, so that recording is stabilized.

According to this mechanism, since the two-photon excitation and emission and the optical absorption are incoherent processes, contrast in the spatial density distribution of generated radicals is reduced, compared with a light intensity distribution for the process light. Therefore, the polymerization reaction of the non-reacting component starts in an area larger than that for the light intensity distribution of the process light. As a result, a fine refractive index distribution caused by scattering does not occur, and a recording can be stabilized without adversely affecting a hologram that has already been recorded.

When a light, such as a laser beam, having high coherence is employed to provide process light, this mechanism can provide an optical recording medium wherein scattering rarely occurs and the number of errors is reduced, and a recording medium therefor.

For comparison with the present embodiment, with reference to Fig. 12, an explanation will be given for a mechanism that is generally used for optical shaping and that is produced by two-photon absorption. In this case, a coherent process is employed whereby either a polymerization initiator is excited by directly absorbing two photons by a polymerization initiator as shown in Fig. 12, or a polymerization initiator is excited by an energy transfer that does not accompany light generation by a two-photon absorbing pigment. Then, the polymerization reaction of the non-reacting component is started within a range that is equal to or smaller than the intensity distribution of the process light, and as a result, a fine refractive index distribution occurs that causes scattering.

Through the above study, it was found that one of the features of this mechanism includes an incoherent process that provides two-photon excitation/emxssion and optical absorption. In order to efficiently operate this mechanism, it is preferable that a direct transfer of energy from the two-photon absorbing pigment to the polymerization initiator is avoided as much as possible.

Therefore, when a two-photon absorbing pigment is contained in a recording layer, it is preferable that the average intermolecular distance between the two-photon absorbing pigment and the polymerization initiator is equal to or greater than 10 nanometers. Specifically, this distance can be obtained by either adjusting the density of the two-photon absorbing pigment in the recording layer or the density of the polymerization initiator.

The density of an organic material contained in a photopolymer is about 1.1, and when $\rho_1$ (wt%) is the density of the polymerization initiator and $M_1$ is the molecular weight, 1.1 * $\rho_1/M_1$(mol/cm$^3$) is the volume density. At this time, $V_1 = 1/(1.1^*\rho_1/M_1)/(6.02^*10^2)$ (nm$^3$) is allocated as a unit volume of one molecule of the polymerization initiator. Likewise, when $V_2$ (nm$^3$) is a unit volume allocated for one molecule of the two-photon absorbing pigment, $V_1^*V_2 > 20^3$ is preferable to obtain an average intermolecular distance, equal to or greater than 10 nanometers, between the polymerization initiator and the two-photon absorbing pigment. When $\rho_2$ (wt%) is the density of the two-photon absorbing pigment and $M_2$ is the molecular weight, it is preferable that the following condition is satisfied:

$$\{1/(1.1*\rho_1/M_1)/(6.02*10^2)\}*\{1/(1.1*\rho_2/M_2)/(6.02*10^2)\} > 20^3.$$

This condition is obtained based on a request that, since the polymerization initiator and the two-photon absorbing pigment are dispersed in the same medium, the product of the individual unit volumes should be larger than a cube that employs, as one side, two times of 10 nanometers.

The analysis for the average intermolecular distance between the two-photon absorbing pigment and the polymerization initiator is enabled by performing an identification for the densities or molecular weights of these components using a chemical method, such as chromatography. Further, when molecular weights or absorption constants are already known, the densities can also be obtained using an optical method, such as a measurement of the absorbance.

For hologram recording using a recording light of 405 nm, when the refractive index of a recording medium is defined as 1, the cycle of light and dark patterns in a hologram is 203 nm at the minimum. In this embodiment, since a uniform optical process is required for both the light and dark portions of a hologram, it is preferable that the upper limit value of the average intermolecular distance between the two-photon absorbing pigment and the polymerization initiator is about half the minimum cycle of the light and dark patterns, i.e., 100 nanometers.

When a two-photon absorbing pigment is introduced into a substrate, the probability is lower than when a pigment is introduced into a recording layer that energy is to be transferred directly from the two-photon absorbing pigment to the polymerization initiator. However, there is a possibility of a case wherein the direct transfer of energy from a two-photon absorbing pigment to a polymerization initiator occurs at the interface between the substrate and the recording layer, and a refractive index distribution that causes scattering is formed. In order to inhibit this phenomenon, it is preferable that, as described above, the intermolecular distance between the two-photon absorbing pigment and the polymerization initiator is equal to or greater than 10 nanometers. Specifically, it is preferable, for example, that either the density of the two-photon absorbing pigment in the substrate or the density of the polymerization initiator in the recording layer is adjusted, or that a gap layer is formed between the substrate and the recording layer in order to prevent the transfer of energy.

For example, in the same manner as described above, when $\rho_1$ (wt%) is the density of the polymerization initiator contained in the recording layer, $\rho_2$ (wt%) is the density of the two-photon absorbing pigment contained in the substrate and $M_2$ is the molecular weight, in order to obtain an intermolecular distance equal to or greater than 10 nanometers, it is preferable that the following condition is satisfied:

$$\{1/(1.1*\rho_1/M_1)/(6.02*10^2)\}*\{1/(1.1*\rho_2/M_2)/(6.02*10^2)\} > 10^3.$$

A preferable thickness for the gap layer is equal to or greater than 10 nanometers in view of the restriction applicable to the intermolecular distance, and a preferable length is equal to or shorter than 100 micrometers in view of efficiently and selectively performing the optical process for spots recorded for a hologram.

The analysis for the average intermolecular distance between the two-photon absorbing pigment and the polymerization initiator is enabled by identifying the densities or molecular weights of these components using chromatography, as in the above case, or an optical method.

Furthermore, for the same reason as described above, it is preferable that the upper limit value of the average intermolecular value between the two-photon absorbing pigment and the polymerization initiator is 10 nanometers.

In addition, in consonance with a multiphoton absorbing pigment, a pigment that becomes luminous through the transfer of energy during the multiphoton absorption process may be present. In this case, it is possible to adjust the wavelength of generated light, and to transfer energy directly from the two-photon absorbing pigment to the polymerization initiator.

Further, it is preferable that irradiation by the process light is performed before recording. This is preferred for the following reasons. Oxygen or a tiny amount of an impurity, which is contained in the material of a recording medium, may act as a polymerization inhibitor, and in such a case, a hologram can not be correctly recorded. Therefore, the reaction of this polymerization inhibitor should be effected in advance, and therefore, irradiation by the process light must be performed prior to the recording.

Multiphoton absorbing pigments used for this embodiment are, for example, as follows: 2,5-bis(p-dimethylaminocinnamylidene)cyclopentanone; 2,6-bis(p-dimethylaminocinnamylidene)cyclohexanone: 1,9-bis(p-dimethylamino)-nonane-1,3,6,8-tetraene-5-one; 2,5-bis[3-(9-ethyl)carbazoyl-3-ylidene]cyclopentanone; trans-2-[p-formylstyryl]benzimidazole; 1,4-bis{4-[2-(4-pyridyl)ethenyl]phenyl}butadiyne; 1,4-bis{2,5-dimethoxy-4-[2-(4-pyridyl)ethenyl]phehyl} butad iyne; 1,4-bis(4-{2-[4-(N-methyl)pyridinium]ethenyl}phenyl)butadi yne triflate; or 1,4-bis(2,5-dimethoxy-4-{2-[4-(N-methyl)pyridinium]ethenyl }phenyl)butadiyne triflate2,5-diphenyl-1,3,4-oxadiazole.

Also, molecules having the structures shown in formulas (1) to (3) can be employed. R denotes a substituent, and a methyl, cyano, nitro or carbonyl group, for example, can be employed.

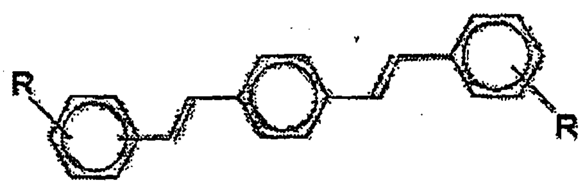

[Formula 1]

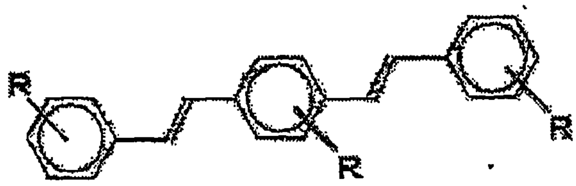

[Formula 2]

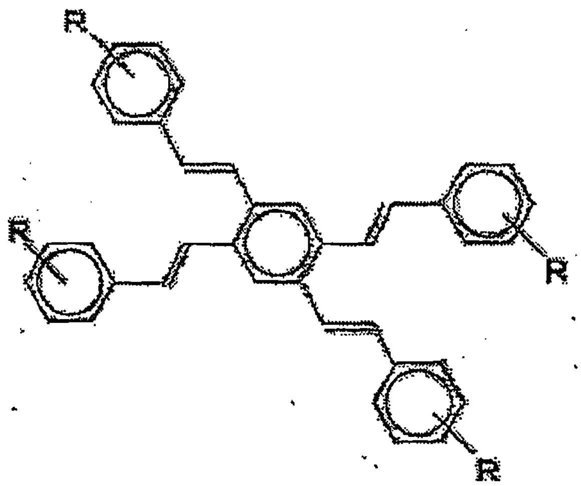

[Formula 3]

The present embodiment will now be described in detail. The holography (hologram) performed according to the present embodiment may be either transmission holography (transmission hologram) or reflection holography (reflection hologram).

Further, the interferometry for information light and for reference light, which is performed for an optical information recording/reproduction apparatus by employing the holography of the present embodiment, may be either a two-beam interferometry or a coaxial interferometry.

(Reflection optical recording medium)

An example for the present embodiment will be described in detail. Fig. 1 is a schematic diagram showing a disk shaped optical recording medium 1 used for reflection coaxial interferometry, for which the present embodiment is applied, and an optical system nearby. The optical recording medium 1 includes a transparent substra.te 4, made, for example, of glass or polycarbonate, on which a recording layer 3 is deposited, on one main surface, and on which a reflecting layer 5 is deposited, on the other main surface. A protective layer 2 is formed on the light incident side of the recording layer 2. This protective layer 2 may not be deposited, and in this case, the recording layer 3 will be made of a photopolymer, and a hologram recording material, used for the recording layer 3, may be either an organic material or an inorganic material. A material having high reflectivity relative to the wavelength of recording light, e.g., aluminum, is employed for the reflecting layer 5. Although not shown, information used to perform tracking servo and address information may be recorded in advance on the surface of the reflecting layer 5, near the transparent substrate 4, by employing its rough surface structure. The sequential servo method is preferable for performing the functions of a tracking servo; however, when disruption of recording light on the reflecting layer 5 is a problem, a sampled servo method may be employed. Wobble pits, for example, may be employed as information used for performing the functions of a tracking servo. Recording light, guided through an object lens 7 to the optical recording medium 1, occurs as an interference in the recording layer 3, and forms hologram 6.

The transparent substrate 4 or the recording layer 3 is preferable as a portion to which a multiphoton absorbing pigment is added; however, use of the portion is not limited to this.

The thickness of the recording layer 3, for example, is equal to or greater than 4 $\mu$m and equal to or smaller than 1000 $\mu$m.

The material of the recording layer 3 is a hologram recording material of a radical polymerization type called a photopolymer. The photopolymer generally contains a photopolymerization compound, photopolymerization initiator

and a matrix material, and may also contain, for example, an acid generating agent, a radical generating agent, a pigment, or an oligomer.

A preferable photopolymerization compound is a compound that includes an acrylate group, and can also be either a compound in which hydrogen has been partially chlorinized, such as isobornyl acrylate, phenoxyethyl acrylate, diethyl glycol monoethyl ether acrylate, ethyl acrylate, vinylbenzoate or vinylnaphthoate, or a compound obtained by providing a substituent containing Si for the above described compound in order to improve a difference in a refractive index. Specifically, such a compound is (trimethylsililoxy) dimethylsililpropylacrylate or (perfluocrochexyl) methyl acrylate. Further, sometimes the contained substituent may be N-vinyl carbazole.

Either a single photopolymerization compound or a mixture of two or more compounds may be employed. Preferably, the content of the photopolymerization compound is about equal to or greater than 5 wt% and equal to or smaller than 50 wt%, relative to the recording layer 3.

The photopolymerization initiator is a compound that absorbs light and initiates a polymerization reaction, and is typically bis(2,6-difluoro-3-pyrrolephenyl)titanothen.

The content of the photopolymerization initiator can be appropriately selected in consonance with the wavelength of recording light, the film thickness of the recording layer 3 and the amount of light absorbed by the photopolymerization initiator, and equal to or greater than 0.1 wt% and equal to or smaller than 5.0 wt% is preferable.

A matrix material can, for example, be an arbitrary type of vinyl polymer, such as polovinylacetate, polycarbonate, polyallylate, a norbornene type resin, polymethyl methacrylate, cellulose acetate butylate, polystyrene methylmethacrylate or an epoxy resin. A preferable content of the matrix material is equal to or greater than 20 wt% and equal to or smaller than 80%, relative to the recording layer 3.

Arbitrary components of the recording layer 3 will now be described. So long as these components are about 0.1 wt%, relative to the entire recording layer 3, the desired effects can be obtained. However, when the content of these components is excessive, sensitivity is reduced. For of these components, the content should be equal to or greater than 0.001 wt% and equal to or smaller than 0.1 wt%.

The acid generating agent that is used can, for example, be aryl dizonium salt, diaryl iodonium salt, triaryl celenonium salt, dialkyl phenacilsulfonium salt, dialkyl-4-hydroxyphenyl sulfonium salt, sulfonate ester, or a ferric arene compound.

The radical generating agent can, for example, be a aromatic carbonyl compound, especially, α, α-dimethoxy-α-phenylacetphenon.

The pigment can, for example, be an azido type compound, 5-nitroacenaphthene, 1,2-benzansulachinon, 1-nitro-4-acetylaminonaphthalene, methylene blue, safranine0, malachite green, cyanine die or rhodamine die.

The oligomer that is used can, for example, be either a multifunctional acrylate resin or epoxy resin, obtained by attaching a reaction group to both ends of the main chain of the radical polymerization compound obtained by polymerization.

The film thickness of the recording layer 3 can be appropriately selected in consonance with the thickness of the substrate 8, the numerical aperture of the lens, the sensitivity of the recording layer 3, the diffraction efficiency of the recording layer 3, the optical density of the recording layer 3, the multiplexing recording method, or the sensitivity of the detector. For example, when the numerical aperture of the lens is 0.6 and the thickness of the substrate 8 is 0.6 mm, the thickness of the recording layer 3 is equal to or greater than 100 μm and equal to or smaller than 500 μm.

(Reflection optical information recording/reproduction apparatus)

Next, an optical recording/reproduction apparatus, to which the optical information recording medium shown in Fig. 1 can be applied, will be described as an example optical information recording/reproduction apparatus that employs holography. As a conventional problem, when the radiation of reference light is performed during the reproduction of reflection type coaxial holography, diffracted light, which serves as reproduction light, and the remaining transmitted light, which is not diffracted, coaxially enter a photodetector, and accordingly, the SN ratio is deteriorated. As a new recording system that resolves this problem, Horimai et al., invented a reflection type polarization coaxial interferometry that for employs polarized light to separate reference light from reproduction light. This system is disclosed, for example, in JP-A 2002-123949 (KOKAI) . Furthermore, at an international conference, Optical Data Storage topical Meeting 2004, Horimai et al. gave a presentation on a new coaxial interferometry whereby information light and modulated reference light are generated by a space light modulator and a hologram is recorded using these lights, and whereby the reference light and reproduction light are separated from each other at the center portion and the peripheral portion of a light axis.

Fig. 2 is a schematic diagram showing an optical recording/reproduction apparatus employing a coaxial interferometry according to the present embodiment; the arrangement of this apparatus will be explained in detail. The information recording/reproduction apparatus employs coaxial interferometry whereby information light and modulated reference light are generated by a space light modulator, and a hologram is recorded using these lights. A laser formed by linear polarization, based on coherence, is preferable as a light source 8. Specifically, the light source 8 is, for example, a semiconductor laser, an He-Ne laser, an argon laser or a YAG laser. A beam expander 9 expands light emitted by the light source 8, and shapes the light into a parallel light flux. The shaped light is reflected by a mirror 10 and transmitted

to a reflection space light modulator 11. The reflection space light modulator 11 includes a plurality of pixels arranged in a two-dimensional grid, and changes, for each pixel, either the direction of reflected light or the polarization direction of reflected light, so that information light, for which information for a two-dimensional pattern is provided, and reference light, which is spatially modulated, can be generated at the same time. A digital mirror device, a reflection liquid crystal device, or a reflection type modulation device that employs a magnetooptical effect can be employed as the reflection space light modulator 11. In Fig. 2, a digital mirror device is employed as the reflection space light modulator 11. A modulation pattern shown in Fig. 3 is displayed on the reflection space light modulator 11, and the portion near the center of the light axis can be employed as an information light area 28, while the peripheral portion can be employed as a reference light area 29. The recording light reflected by the reflection space light modulator 11 passes through imaging lenses 12 and 13 and enters a polarized beam splitter 14. In this case, the polarization direction is adjusted in advance when light is emitted by the light source 8, so that the recording light is transmitted through the polarized beam splitter 14. The recording light transmitted through the polarized beam splitter 14 also passes through an optical device 15 used for optical rotation, and enters a dichroic prism 16 that is designed to transmit the wavelength of recording light. After the light has been transmitted through the dichroic prism 16, the light is guided to the optical recording medium 1 through an object lens 7, and is condensed on the surface of the reflecting layer 5 of the optical recording medium 1, so that the smallest beam diameter is attained. A quarter-wave plate or a half-wave plate can be employed as the optical device 15 for optical rotation. As described above, when the optical recording medium 1 is irradiated with recording light for which the center portion of the light axis is information light and the peripheral portion is reference light, the information light and the reference light interfere with each other in the recording layer 3, and as a result, hologram 6 is formed for the optical recording medium 1. For the reproduction of recorded information, a modulation pattern shown in Fig. 4, wherein the area of reference light in the peripheral portion is the same as that of the recording light shown in Fig. 3, is displayed on the reflection space light modulator 11. Then, as for recording, light is transmitted as reference light to the optical recording medium 1. When reference light is transmitted through the optical recording medium 1, part of the reference light is diffracted by the hologram 6 and is changed to reproduction light. The reproduction light is reflected by the reflecting layer 5, and the reflected light is transmitted through the object lens 7 and the dichroic prism 16. When the reflected reproduction light is transmitted through the optical device 15 used for optical rotation, this light obtains a polarized component that differs from the reference light and is reflected by the polarized beam splitter 14. It is preferable that the rotation angle of the optical device 15 is so adjusted that the reflectivity of the reproduction light at the polarized beam splitter 14 is the highest. The reproduction light reflected by the polarized beam splitter 14 is passed through an imaging lens 18, and a reproduced image is formed on a two-dimensional photodetector 19. Further, the reference light that was not diffracted by the hologram 6 is guided as transmitted light, and with the reproduction light, forms an image on a two-dimensional-photodetector 19. However, since the center portion of the reference light is reproduction light and the peripheral portion is transmitted light, the light can be easily separated spatially. In order to improve the S/N ratio of a reproduction signal, an iris 20 may be arranged in front of the photodetector 19 to block the reference light portion.

(Recording/reproduction method)

Functions as a servo for the optical recording medium 1, or performing recording/reproduction for an existing optical disk, will be described. The optical recording/reproduction apparatus shown in Fig. 2 includes a light source 21 for servo performance and for performing recording and reproduction for an existing optical disk. The light source 21 is a laser, such as a semiconductor laser, that is formed by linear polarization. Specifically, it is preferable that a laser has a wavelength differing from that of the light source 8 used for recording and that does not change the optical characteristics of the recording layer 3, and a red semiconductor laser having a wavelength of around 650 nm or a near-infrared semiconductor laser having a wavelength of around 780 nm is preferable. Servo light emitted by the light source 21 is shaped into a parallel light flux by a collimating Lens 22, and the parallel light enters a polarized beam splitter 23. In this case, the polarization direction is adjusted in advance when light is emitted by the light source, so that the light can be transmitted through the polarized beam splitter 23. After the servo light has been transmitted through the polarized beam splitter 23, it passes through an optical device 24 used for optical rotation, and enters the dichroic prism 16, which is so designed that it reflects the wavelength of the servo light. A quarter-wave plate or a half-wave plate can be employed as the optical device 24 used for optical rotation. The servo light reflected by the dichroic prism 16 is guided through the object lens 7 to the optical recording medium 1 and is condensed on the surface of the reflecting layer 5 of the optical recording medium 1, so that the smallest beam diameter is obtained. The servo light is reflected by the reflecting layer 5, and at this time, is modulated by pits that are formed in the reflecting surface. The servo light returning from the optical recording medium 1 passes through the object lens 7 and is reflected by the dichroic prism 16, and the reflected light passes through the optical device 24 used for optical rotation. When the reflected, servo return light passes through the optical device 24, this light obtains a polarization component, and thus differs from the servo light emitted by the light source 21, and is then reflected by the polarized beam splitter 23. It is preferable that the rotation angle of the optical device 24 is adjusted, so that for the servo return light the reflectivity of the polarized beam splitter 23 is the highest. The servo return light reflected by the polarized beam splitter 23 then passes through a convex lens 25 and a cylindrical lens 26, and is detected by a quadripartite photodetector 27. Based on the output of the quadripartite photodetector 27,

an address signal, a focus error signal and a tracking error signal are generated.

Fig. 5 is a block diagram showing a circuit for detecting a focusing error signal and a tracking error signal based on the output of the quadripartite photodetector 27. This detection circuit includes: an adder 30, which adds the outputs of light receiving portions 27a and 27d, diagonally arranged in the quadripartite photodetector 27; an adder 31, which adds the outputs of light receiving portions 27b and 27c, diagonally arranged in the quadripartite photodetector 27; a subtractor 32, which calculates a difference between the output of the adder 30 and the output of the adder 31, and generates a focusing error signal FE using the astigmatism method; and an adder 33, which adds the outputs of the light receiving portions 27a and 27b, adjacently located in the quadripartite photodetector 27 in the direction of a track; an adder 34, which adds the outputs of the light receiving portions 27c and 27d adjacently located in the quadripartite photodetector-27 in the direction of the track; a subtractor 35, which calculates a difference between the output of the adder 33 and the output of the adder 34, and generates a tracking error signal TE using a push-pull method; and an adder 36, which adds the outputs of the adder 33 and the adder 34 and generates a reproduction signal RF. In this case, the reproduction signal RF is a signal obtained by reproducing information that is recorded in advance on the reflecting layer 5 of the optical recording medium 1. For the correction of the positioning for the optical recording medium 1, relative to the optical recording/reproduction apparatus, the object lens 7 is driven by a voice coil motor 17 shown in Fig. 2, so that a focusing error signal FE and a tracking error signal TE, obtained in the above described manner by the quadripartite photodetector 27, become 0.

(General configuration of the optical recording/reproduction apparatus)

The general configuration of the optical recording/reproduction apparatus according to the present embodiment will now be described while referring to Fig. 6. The optical recording/reproduction apparatus indludes: a spindle 38, on which the optical information recording medium 1 is to be mounted; a spindle motor 39, which rotates the spindle 38; and a spindle servo circuit 40, which controls the spindle motor 39 so as to maintain a predetermined number of rotations for the optical recording medium 1. A stepping motor may be employed instead of the spindle motor 39. The optical information recording/reproduction apparatus further includes: a pickup 37, which irradiates the optical recording medium 1 with information light and recording reference light to record information, and also irradiates the optical recording medium 1 with reproduction reference light to detect the reproduction light and to reproduce the information recorded on the optical recording medium 1; a light source 42; and a driver 41, which drives the pickup 37 and the light source 42 in the direction of the radius of the optical recording medium 1. The optical information recording/reproduction apparatus also includes: a detection circuit 43, which detects a focusing error signal FE, a tracking error signal TE and a reproduction signal RF based on a signal output by the pickup 37; a focusing servo circuit 44, which, based on the focusing error signal FE detected by the detection circuit 43, permits the actuator of the pickup 37 to move the object lens 7 in the direction of the thickness of the optical recording medium 1, and functions as a focusing servo; a tracking servo circuit 45, which, based on the tracking error signal TE detected by the detection circuit 43, permits the actuator of the pickup 37 to move the object lens 7 in the direction of the radius of the optical recording medium 1, and functions as a tracking servo; and a slide servo circuit 46, which, based on the tracking error signal TE and an instruction issued by a controller that will be described later, permits the driver 41 to move a pickup 61 in the direction of the radius of the optical recording medium 1, and functions as a slide servo. Furthermore, the optical information recording/reproduction apparatus includes: a signal processing circuit 47, which decodes data output by the two-dimensional photodetector of the pickup 37 to reproduce data recorded in the information recording area of the optical recording medium 1, or employs the reproduction signal RF received from the detection circuit 43 to reproduce a basic clock or to identify an address; a controller 48, which controls the entire optical information recording/reproduction apparatus; and an operating unit 49, which provides various instructions for the controller 48. The controller 48 receives the basic clock and address information output by the signal processing circuit 47 and controls the pickup 37, the spindle servo circuit 40 and the slide servo circuit 46. The spindle servo circuit 40 receives the basic clock output by the signal processing circuit 47. The controller 48 includes a CPU (Central Processing Unit), a ROM (Read Only Memory) and a RAM (Random Access Memory) . When the CPU executes a program stored in the ROM while using the RAM as a work area, the function of the controller 48 is provided.

The present embodiment can be provided with the above described configuration. However, as described above, for the present embodiment, a transmission optical recording medium may be employed as the optical recording medium 1. Recently, at the international conference Optical Data Storage Topical Meeting 2004, Horimai, et.al., gave also gave a presentation on hologram recording using an optical recording medium that includes a dichroic reflecting layer (Hideyuki Horimai and Kun Li, "A Novel Collinear Optical Setup for Holographic Data Storage System", Technical Digest Of Optical Data Storage Topical Meeting 2004, pp. 258-260, (2004)). Further, the optical information recording/ reproduction apparatus may employ either the two-beam interferometry or the coaxial interferometry as the interferometry for information light and reference light. Furthermore, instead of a digital mirror device, a reflection liquid crystal device or a reflection magnetooptical device may be employed as a space light modulator.

(Transmission coaxial interferometry)

An example wherein the present embodiment is applied for the transmission coaxial interferometry will now be

described. Fig. 7 is a schematic diagram showing an optical recording medium used for the transmission coaxial interferometry. Fig. 8 is a schematic diagram showing an optical information recording/reproduction apparatus that employs the transmission coaxial interferometry. An optical recording medium 1 shown in Fig. 1, is formed by removing the reflecting layer 5 from the structure shown in Fig. 1.

In this structure, a transparent substrate 4 or a recording layer 3 is a preferable portion to which is to be added a pigment according to this embodiment; however, the portion is not limited to this.

The basic arrangement of the optical information recording/reproduction apparatus shown in Fig. 8 is substantially the same as that for the optical information recording/reproduction apparatus shown in Fig. 2.

A laser formed by linear polarization based on coherence is preferable as a light source 8. A beam expander 9 expands light emitted by the light source 8, and shapes the light into a parallel light flux. The shaped light is reflected by a mirror 10 and transmitted to a reflection space light modulator 11. The reflection space light modulator 11 includes a plurality of pixels arranged in a two-dimensional grid, and changes, for each pixel, the direction of travel of reflected light, or the polarization direction of reflected light, so that information light, for which information for a two-dimensional pattern is provided, and reference light, which is spatially modulated, can be generated at the same time. In this arrangement, a digital mirror device is employed as the reflection space light modulator 11. A modulation pattern shown in Fig. 3 is displayed on the reflection space light modulator 11, and the portion near the center of the light axis can be employed as an information light area 28, while the peripheral portion can be employed as a reference light area 29. The recording light reflected by the reflection space light modulator 11 passes through imaging lenses 12 and 13, and enters a dichroic prism 16 that is designed to perform the transmission of the wavelength of recording light. After the light has passes through the dichroic prism 16, the light is guided, through an object lens 7, to the optical recording medium 1 and is condensed on the surface of the outer interface of the transparent substrate 4 of the optical recording medium 1, so that the smallest beam diameter is obtained. As described above, when the optical recording medium 1 is irradiated with such recording light that the center portion of the light axis is information light and the peripheral portion is reference light, the information light and the reference light interfere with each other in the recording layer 3, and as a result, hologram 6 is formed for the optical recording medium 1. For the reproduction of recorded information, a modulation pattern shown in Fig. 4, wherein the area of reference light in the peripheral portion is the same as that of the recording light shown in Fig. 3, is displayed on the reflection space light modulator 11. Then, as for recording, light is transmitted as reference light to the optical recording medium 1. When the reference light passes through the optical recording medium 1, part of the reference light is diffracted by the hologram 6 and is changed to reproduction light. The reproduction light thus diffracted is transmitted through the optical recording medium 1, and passes through a pickup lens 50 and forms a reproduced image on a two-dimensional photodetector 19. Further, the reference light that was not diffracted by the hologram 6 serves as a transmitted light, and as does the reproduction light, and forms an image on the two-dimensional photodetector 19. However, since the center portion of the reference light is reproduction light and the peripheral portion is transmitted light, the light can be easily separated spatially. In order to improve the S/N ratio of a reproduction signal, an iris 20 may be arranged in front of the photodetector 19 to block the reference light portion.

The process for the servo performance and the process for the performance of recording and reproduction for an existing optical disk are performed in the same manner as those performed by the optical information recording/reproduction apparatus shown in Fig. 2, with the exception that part of the servo light is reflected at the outer interface of the transparent substrate 4, and at this time, the light is modulated by pits that are formed in the outer face of the transparent surface 4. In addition, based on a focusing error signal and a tracking error signal obtained by the quadripartite photodetector 27, the voice coil motor 51 can also be driven to adjust the position of the pickup lens 51.

(Dichroic reflection optical recording medium)

A case will now be described wherein an optical recording medium is employed that includes a dichroic reflecting layer. Fig. 9 is a schematic diagram showing an optical recording medium that is employed for reflection coaxial interferometry and that includes a dichroic reflecting layer. An optical recording medium 1 includes a dichroic reflecting layer 52 in addition to the structure shown in Fig. 1. The dichroic reflecting layer 52 has as one property the reflection of the wavelength of recording light emitted by the light source 8 shown in Fig. 2 and the passing of the wavelength of servo light emitted by the servo light source 22 shown in Fig. 2, and is made, for example, of a dielectric multilayer film. The material used for forming a dielectric multilayer film can be $SiO_2$, $TiO_2$, $NbO_3$ or $CaF_2$. Further, a gap layer 53 may be formed, so that the recording of a hologram can be avoided in an area where recording light is condensed and the light intensity is very strong. An arbitrary material for the gap layer 53 can be employed so long as it permits the through passage of recording light and is not dissolved with the recording material of the recording layer 3, and for this, glass or polycarbonate can be employed. According to this optical recording medium of this embodiment, the gap layer 53 or the recording layer 3 is preferable as the portion to which a pigment is to be added; however, the portion is not limited to this.

Substantially the same arrangement as shown in Fig. 2 can be employed for an optical information recording/reproduction apparatus. For the recording of a hologram, recording light is guided to the optical recording medium 1-through the object lens 7, and is condensed on the surface of the dichroic reflecting layer 52 of the optical recording medium 1, so as to obtain the minimum beam diameter for the recording light. As a result, the hologram 6 is formed in

the recording layer 3. On the other hand, servo light is transmitted through the dichroic reflecting layer 52, and is condensed on the surface of the reflecting layer 5, so that the minimum beam diameter is obtained for the servo light. In order to differentiate the condensing position for the recording light from the condensing position for the servo light, one of the following methods can be employed. That is, an object lens having a chromatic aberration is employed; the distance between the light source 21, which is used to perform servo and to perform recording and reproduction for an existing optical disk, and the collimating lens 22 is increased; or a concave correction lens is inserted between the optical device 24 used for optical rotation and the dichroic prism 16 shown in Fig. 2.

(Transmission two-beam interferometry)

An example wherein the present embodiment is applied for the transmission of two-beam interferometry will be described. An optical recording medium can be employed that has substantially the same structure as that shown in Fig. 7 for a transmission optical recording medium. In this structure, a transparent substrate 4 or a recording layer 3 is preferable as a portion, according to the present embodiment, to which a pigment is to be added; however, such a portion is not limited to this.

Fig. 10 is a schematic diagram showing the arrangement of an optical information recording/reproduction apparatus that employs the transmission of two-beam interferometry. As for the above described optical information recording/reproduction apparatus, a laser obtained by linear polarization is appropriate for use as a light source 8. Light emitted by the light source 8 is separated into information light and reference light by an optical device 54, used for optical rotation, and a polarized beam splitter 55. A quarter-wave plate or a half-wave plate can be used as the optical device 54 for optical rotation. The light that passes through the polarized beam splitter 55 is used as information light, and substantially the same method as is employed by the optical information recording/reproduction apparatus described above is employed for the generation of the information light. A beam expander 9 expands the light transmitted through the polarized beam splitter 5, and shapes the light into parallel light fluxes. The thus shaped light is reflected by a mirror 10, and enters to a reflection space light modulator 11. The reflection space light modulator 11 includes a plurality of pixels arranged in a two-dimensional grid, and changes, for each pixel, the direction of reflected light, or the polarization direction of reflected light, so that information light, for which information is provided as a two-dimensional pattern, can be generated. For this arrangement, a digital mirror device is employed as the reflection space light modulator 11. The information light generated by the reflection space light modulator 11 passes through imaging lenses 12 and 13 and enters a dichroic prism 16, which is so designed that the through passage of the wavelength of the recording is permitted. After the light is transmitted through the dichroic prism 16, the light is guided through an object lens 7 to irradiate the optical recording medium 1.

On the other hand, the light reflected by the polarized beam splitter 55 is employed as reference light. First, the light reflected by the polarized beam splitter 55 is converted by a half-wave plate 56 into light having the same polarization direction as the information light. After the polarization direction has been changed, the reference light is guided to the optical recording medium 1 by mirrors 57 and 58, so that the light is superimposed on the information light inside the recording layer 3. When the information light and the reference light interfere with each other inside the recording layer 3, information can be recorded as a hologram.

For the reproduction of recorded information, the optical recording medium 1 is irradiated only with the reference light. When the reference light passes through the optical recording medium 1, part is diffracted by the recorded hologram and becomes reproduction light. The diffracted reproduction light passes through a pickup lens 50, and forms a reproduced image on a two-dimensional photodetector 19.

For the above described structures for the optical recording medium and the above described arrangements for the optical information recording/reproduction apparatus, when the light source 21, which is used to perform servo and to perform recording/reproduction for an existing optical disk, emits a red or near-infrared light to irradiate an optical disk, multiphoton excitation can be produced in a pigment contained in the optical recording medium, and utilizing the emission of the pigment, the optical process that is the feature of this embodiment can be performed.

By employing the above described method, it is possible to provide an optical recording medium, for which a polymerization reaction due to optical excitation is employed, and a simple, compact optical information recording/reproduction apparatus that can perform the optical process for an optical recording medium without having to mount a light source, such as a light emitting diode, in addition to a recording light source.

(Examples)

The examples of the present embodiment will now be described. It should be noted, however, that without departing from the subject of the present embodiment, the present embodiment is not limited to these examples.

(Example 1)

<Fabrication of an optical recording medium>

According to this example, a reflection optical recording medium shown in Fig. 1 was fabricated using the following method.

(Preparation of a recording layer)

First, 0.022 g of Irgacure 784 (produced by Ciba Specialty Chemicals Holding Inc.), 0.01 g of 1,4-bis(4-{2-4(N-methyl)pyridinium]ethenyl}phenyl)butadiyn e triflate, which is two-photon absorbing pigment, 3.02 g of 1.6-hexanediol diglycidil ether and 0.945 g of tetraethylenepentamine were mixed into 0.991 g of vinylcarbazole, and the obtained mixture was degassed. Thus, a precursor for an optical recording medium was prepared.

(Fabrication of an optical recording medium)

A glass substrate (0.5 mm thick) was prepared that included a reflecting layer formed of aluminum. A spacer 250 μm thick, made of a fluorocarbon resin, was then mounted on the circumferential edge of the main face of the glass substrate, opposite the reflecting layer, and the previously mixed solution, prepared in (preparation for a recording layer), was cast between the spacer and the edge. After casting, an additionally prepared glass substrate (0.5 mm thick) was arranged on the opposite side, and pressure was uniformly applied to the entire structure to spread the layer of the solution mixture to a thickness of 250 μm. Finally, the structure was heated at 50°C for ten hours, to fabricate an optical recording medium having a recording layer 250 μm thick. For the obtained optical recording medium of this example, the glass substrates serve as the protective layers 2. In order to avoid exposure of the recording layer, the processing sequence in this example was performed indoors, where light having a waveform shorter than 600 nm was blocked.

<Recording of information>

(Optical information recording/reproduction apparatus)

First, the optical information recording/reproduction apparatus having the arrangement in Fig. 2 was prepared. A blue semiconductor laser (a wavelength of 405 nm and an output of 10 mW) with an external resonator was employed as the light source 8 used for recording. A red semiconductor laser (a wavelength of 650 nm and an output of 150 mW) was employed as the light source 21 that performs two-photon absorption excitation. A digital mirror device was employed as the reflection space light modulator 11, and a CCD array was employed as the two-dimensional photodetector 19. A quarter-wave plate for a wavelength of 405 nm was employed as the optical device 15 for optical rotation, while a quarter-wave plate for a wavelength of 650 nm was employed for the optical device 24 for optical rotation. Further, the bearing of the quarter-wave plate that serves as the optical device 15 was adjusted, so that on the two-dimensional photodetector 19 the maximum intensity of the reproduction light was attained. Likewise, the bearing of the optical device 24 for optical rotation was adjusted, so that on the quadripartite photodetector 27 the maximum light intensity was attained.

In this example, the optical recording medium was placed on a stage that was to be moved by a stepping motor. Before recording, focusing was performed to obtain the smallest recording light spot size on the reflecting layer, and thereafter, the recording/reproduction of information was performed without moving the optical recording medium. An area of 400 x 400 = 160000 pixels on the digital mirror device 11 was employed. For an information light area, the center portion of 144 x 144 pixels was employed, and a 16:3 modulation method was employed whereby adjacent 4 x 4 = 16 pixels were defined as one symbol, and three of the 16 pixels were used as bright points. The number of symbols in the information light area, except for areas used for positioning marks, was 1120.

(Pre-recording optical process)

Next, the obtained optical recording medium was loaded into the produced optical information recording/reproduction apparatus, and the pre-recording optical process was performed lighting the red semiconductor laser 21 for one second. The light intensity of the red laser on the surface of the optical recording medium was 50 mW.

(Recording)

After the optical process was performed, both the information light area and the reference light area were displayed on the digital mirror device 11, and information recording was performed lighting the recording semiconductor laser 8 for one second. The light intensity of the recording light on the surface of the optical recording medium was 0.1 mW, and the spot size of the laser beam on the upper face of the recording layer was 400 μm in a diameter.

<Reproduction of information>

(Reproduction)

When 30 seconds and 300 seconds had elapsed following the completion of the recording of information, only the reference light was displayed on the digital mirror device 11, the recording semiconductor laser 8 lighted for one second, and reproduction light was obtained on the CCD array 19 that served as a two-dimensional photodetector. The light intensity of the reproduction light on the surface of the optical recording medium was 0.02 mW.

(Determination)

Next, the recording/reproduction performance for the optical recording medium was evaluated using the following method.

By referring to positioning marks, the image processing was performed for the reproduction light obtained on the CCD array 19. Thereafter, a bright point and dark point determination and an output pattern determination were performed, and the obtained pattern was compared with the information light pattern input to the digital mirror device 11 to calculate the number of symbol errors. The obtained results are shown in Table 1.

(Example 2)

<Recording of information>

The information recording process was performed in the same manner as in (Example 1) until (recording) was completed.

(Post-recording optical process)

After the recording of information was completed, the post-recording optical process was performed by lighting the red semiconductor laser for twenty seconds. The light intensity of the red semiconductor laser on the surface of the optical recording medium was 50 mW. When 30 seconds and 600 seconds had elapsed since the recording of the information was completed, the reproduction light was obtained by the same method as employed in (Example 1) . The light intensity of the reproduction light on the surface of the optical recording medium was 0.02 mW. Finally, a reproduction light determination was performed using the same method as that in (Example 1). The obtained results are shown in Table 1.

(Example 3)

<Fabrication of an optical recording medium>

In this example, a reflection optical recording medium shown in Fig. 1 was fabricated using the following method.

(Preparation of a recording layer)

First, 0.022 g of Irgacure 784 (produced by Ciba Specialty Chemicals Holding Inc.), 3.02 g of 1.6-hexanediol diglycidil ether and 0.945 g of tetraethylenepentamine were mixed into 0.991 g of vinylcarbazole, and the obtained mixture was degassed. Thus, a precursor for an optical recording medium was prepared.

(Fabrication of a substrate)

In this example, a glass substrate coated with a polymer film containing a two-photon absorbing pigment was employed.

First, a mixture of 1.99 g of polymethyl methacrylate (PMMA) and 0.01 g of 1,4-bis(4-{2-[4(N-methyl)pyridinium] ethenyl}phenyl)butadiy ne triflate, which is a two-photon absorbing pigment, was dissolved in 18 g of ethyl lactate. Then, using spin coating, this solution was applied to the main surface, of the glass substrate (0.5 mm thick) that included a reflecting layer formed of aluminum, that was opposite the reflecting layer. Thereafter, the resultant structure was dried for ten minutes by being placed on a hot plate that was heated to 50°C, and a two-photon absorbing pigment layer was obtained. The thickness of the two-photon absorbing pigment layer was 10 μm.

(Fabrication of an optical recording medium)

A spacer 250 μm thick, made of a fluorocarbon resin, was mounted on the two-photon absorbing layer formed during the previous process, and the mixed solution, obtained in (preparation for a recording layer) was cast between the spacer and the layer. After casting, an additionally prepared glass substrate (0.5 mm thick) was arranged on the opposite side, and pressure was uniformly applied to the entire structure to spread the layer of the mixed solution to a thickness of 250 μm. Finally, the structure was heated at 50°C for ten hours, and an optical recording medium having a recording layer of 250 μm thick was fabricated. In order to avoid exposure of the recording layer, the process sequence in this example was performed indoors, where light having a waveform shorter than 600 nm was blocked.

<Recording of information>

(Optical information recording/reproduction apparatus)

As in (Example 1), the optical information recording/reproduction apparatus having the arrangement shown in Fig. 2 was employed.

(Pre-recording optical process)

Next, the obtained optical recording medium was loaded into the optical information recording/reproduction apparatus that had been produced, and the pre-recording optical process was performed by lighting the red semiconductor laser 21 for one second. The light intensity of the red laser on the surface of the optical recording medium was 50 mW.

(Recording)

After the optical process was performed, both the information light area and the reference light area was displayed on the digital mirror device 11, and information recording was performed by lighting the recording semiconductor laser 8 for one second. The light intensity of the recording light on the surface of the optical recording medium was 0.1 mW, and the spot size of the laser beam on the upper face of the recording layer was 400 μm in diameter.

<Reproduction of information>

(Reproduction)

When 30 seconds and 300 seconds had elapsed since the recording of information was completed, only the reference light was displayed on the digital mirror device 11, the recording semiconductor laser 8 was lighted, respectively, for one second, and reproduction light was obtained on the CCD array 19 that served as a two-dimensional photodetector. The light intensity of the reproduction light on the surface of the optical recording medium was 0.02 mW.

(Determination)

Next, the recording/reproduction performance for the optical recording medium was evaluated using the following method.

By referring to positioning marks, the image processing was performed for the reproduction light obtained on the CCD array 19. Thereafter, a bright point and dark point determination and an output pattern determination were performed, and the obtained pattern was compared with the information light pattern input to the digital mirror device 11. The obtained results are shown in Table 1.

(Example 4)

<Recording of information>

The information recording process was performed in the same manner as in (Example 3), till (recording) was completed.

(Post-recording optical process)

After the recording of information was completed, the post-recording optical process was performed by lighting the red semiconductor laser for twenty seconds. The light intensity of the red semiconductor laser 21 on the surface of the optical recording medium was 50 mW. When 30 seconds and 600 seconds had elapsed since the recording of information was completed, the reproduction light was obtained by the same method as employed in (Exmaple 3) . The light intensity of the reproduction light on the surface of the optical recording medium was 0.02 mW. Finally, a reproduction light determination was performed using the same method as in (Example 3). The obtained results are shown in Table 1.

(Comparison Example 1)

The same method as used in (Example 1) was employed to perform the recording of information, the reproduction and determination, except for the (pre-recording optical process) . The reproduction was performed after 30 seconds and 600 seconds elapsed from recording, and the obtained results are shown in Table 1.

(Comparison Example 2)

As a comparison for (Example 1), the recording semiconductor layer 8 was employed as a light source for the pre-recording optical process. The pre-recording optical process was performed by lighting the recording semiconductor laser 8 for one second. The light intensity of the recording light on the surface of the optical recording medium was 0.02 mW.

Information recording/reproduction and determination processes were performed in the same manner as in (Example 1). The reproduction was performed when 30 seconds and 600 seconds elapsed since recording was ended, and the obtained results are shown in Table 1.

(Comparison Example 3)

As a comparison for (Example 2), the recording semiconductor layer 8 was employed as a light source for the pre-recording optical process and the post-recording optical process. The same processing as in (Comparison Example 2) was performed until the recording of information was completed. After the recording was completed, the post-recording optical process was performed by lighting the recording semiconductor laser 8 for twenty seconds. The light intensity of the recording light on the surface of the optical recording medium was 0.02 mW.

Information determination was performed in the same manner as in (Example 1). Reproduction was performed when 30 seconds and 600 seconds had elapsed since the recording was completed. The obtained results are shown in Table 1.

(Comparison Example 4)

An optical recording medium that contains all the components used in (Example 1) except for a two-photon absorbing pigment was fabricated, and pre-recording optical process, recording, reproduction and determination were performed in the same manner as in (Example 1). The obtained results are shown in Table 1.

(Comparison Example 5)

An optical recording medium that contains all the components used in (Example 2), except for a two-photon absorbing pigment, was fabricated, and (recording), (post-recording optical process), (reproduction) and (determination) were performed in the same manner as in (Example 2). The obtained results are shown in Table 1.

Through these examples and comparison examples, it is found that the optical process was performed using the two-photon absorbing pigment and the red laser.

[Table 1]

| | Number of Errors | |
|---|---|---|
| | After 30 Seconds | After 600 Seconds |
| Example 1 | 0 | 47 |
| Example 2 | 0 | 6 |
| Example 3 | 0 | 57 |
| Example 4 | 0 | 8 |
| Comparison Example 1 | 8 | 63 |
| Comparison Example 2 | 23 | 108 |
| Comparison Example 3 | 43 | 117 |
| Comparison Example 4 | 67 | 271 |

(continued)

| | Number of Errors | |
|---|---|---|
| | After 30 Seconds | After 600 Seconds |
| Comparison Example 5 | 65 | 259 |

As shown in Table 1, the number of errors is smaller in example 1 than in comparison examples 1 and 2. Therefore, it is found that noise is less when irradiation using the red process light is performed before recording than when irradiation using the process light is not performed, or when irradiation using a process light other than red is performed before recording.

Further, the number of errors is smaller in example 1 than in comparison example 4. Therefore, it is apparent that an optical recording medium that contains a multiphoton absorbing pigment produces less noise than an optical recording medium that does not contain this pigment.

Furthermore, the number of errors is smaller in example 2 than in example 1. Thus, it is found that noise is less when irradiation using the process light is performed before and after recording than when irradiation using the process light is performed only before recording.

It is apparent that the same trend as provided by examples 1 and 2 are also provided by examples 3 and 4, wherein the substrates contain multiphoton absorbing pigments.

The present invention has been described using the embodiments. However, the present invention is not limited to these embodiments, and can be variously modified within the scope of the invention described in the claims of the invention. Furthermore, when the present invention is to be carried out, the invention can be variously modified without departing from the scope of the subject of the present invention. Additionally, various inventions can be provided by appropriately combining a plurality of components disclosed in the above described embodiments.

## Claims

**1.** An optical recording medium comprising:

a recording layer containing a photopolymerization initiator and a photopolymerization compound; and
a pigment that generates light through a multiphoton absorption process.

**2.** The medium according to claim 1, wherein a wavelength of the light generated by the pigment is within a range equal to or higher than 310 nm and to equal to or lower than 425 nm.

**3.** The medium according to either of claims 1 or 2,
wherein the pigment is contained in the recording layer;
wherein an average intermolecular distance between the pigment and the photopolymerization initiator is equal to or greater than 10 nm.

**4.** The medium according to any preceding claim, further comprising:

a substrate containing the pigment;
a gap layer provided on the substrate and below the recording layer.

**5.** The medium according to any preceding claim, further comprising:

a dichroic layer containing a dielectric multilayer film below the recording layer.

**6.** The medium according to claim 5, wherein the pigment is contained in the dichroic layer.

**7.** The medium according to claim 6, further comprising a gap layer between the recording layer and the dichroic layer.

**8.** An optical recording method comprising:

emitting a red laser to irradiate an optical recording medium at least one of before and after recording is performed,

wherein the optical recording medium includes a recording layer containing a photopolymerization initiator and a photopolymerization compound, and a pigment that generates light through a multiphoton absorption process.

**9.** The method according to claim 8, wherein a wavelength of the light generated by the pigment is within a range equal to or higher than 310 nm and to equal to or lower than 425 nm.

**10.** The method according to either of claims 8 or 9, wherein a wavelength of the red laser is 620 to 850 nm.

FIG. 1

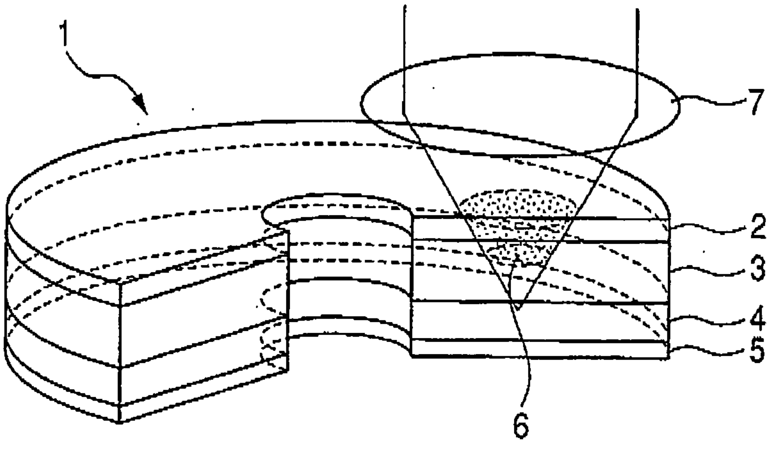


FIG. 2

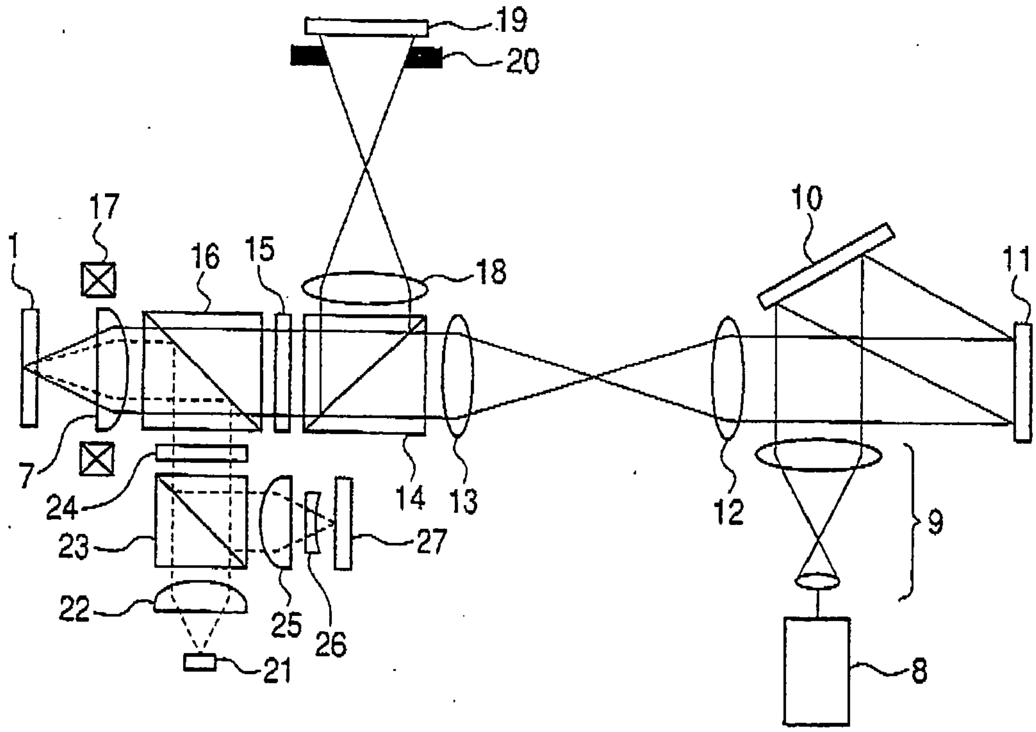

FIG. 3

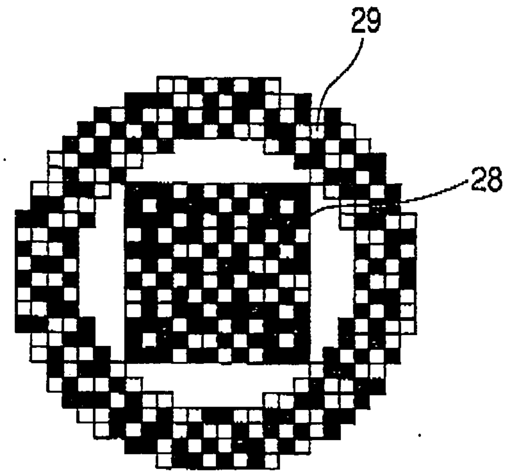


FIG. 4

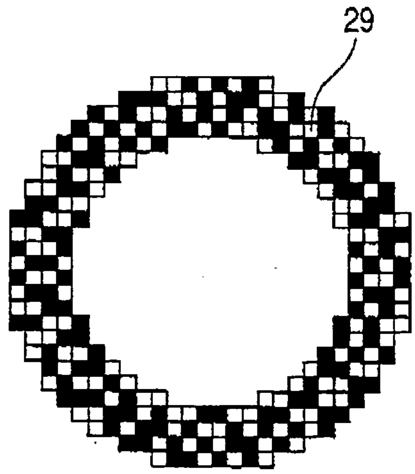

FIG. 5

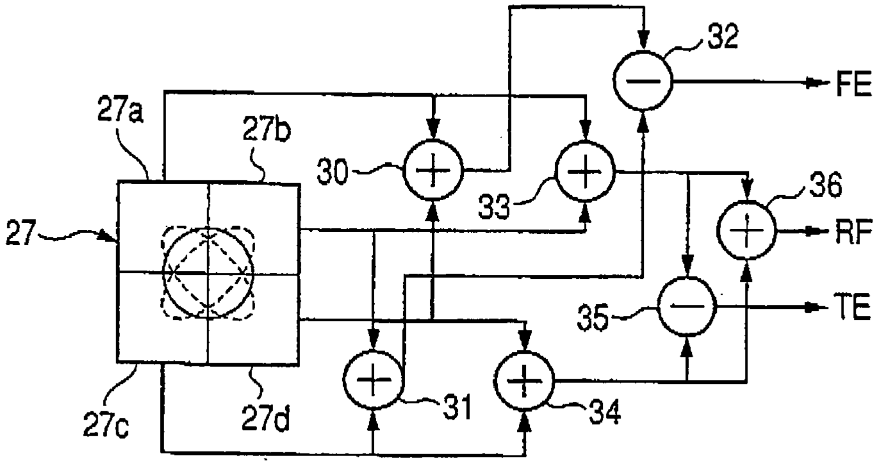
27a
27b
27
30
33
32
FE
36
RF
35
TE
31
34
27c
27d

FIG. 6

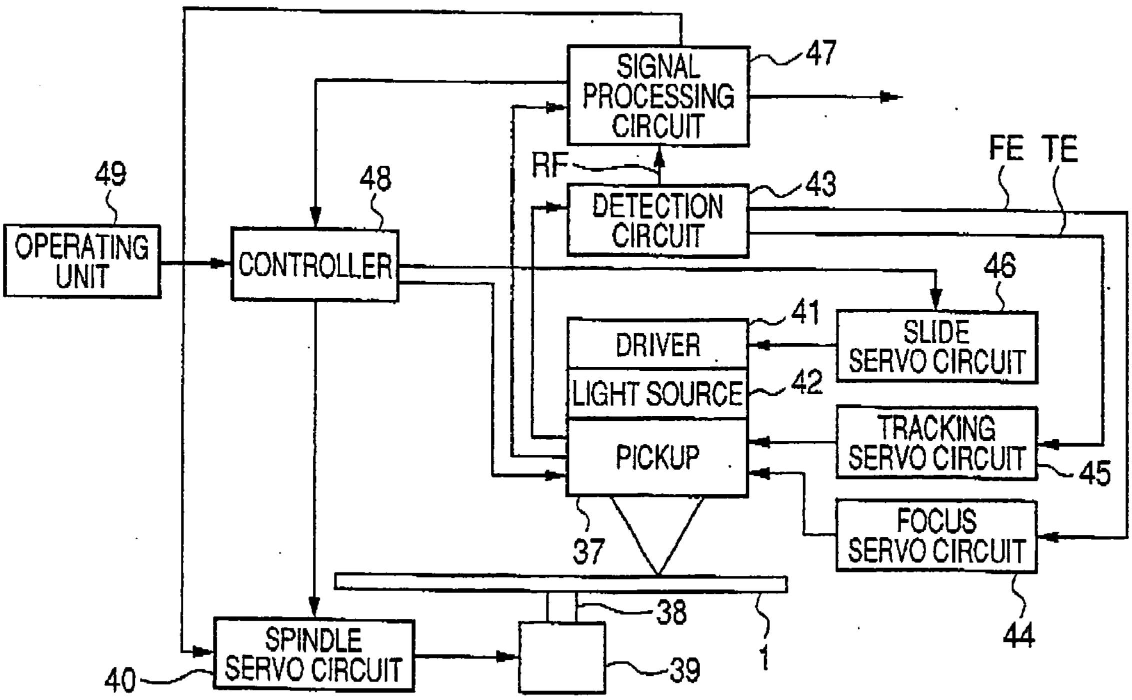
SIGNAL PROCESSING CIRCUIT
47
RF
DETECTION CIRCUIT
43
FE TE
49
OPERATING UNIT
48
CONTROLLER
46
41
DRIVER
SLIDE SERVO CIRCUIT
LIGHT SOURCE
42
PICKUP
TRACKING SERVO CIRCUIT
45
FOCUS SERVO CIRCUIT
37
38
1
44
SPINDLE SERVO CIRCUIT
40
39

FIG. 7

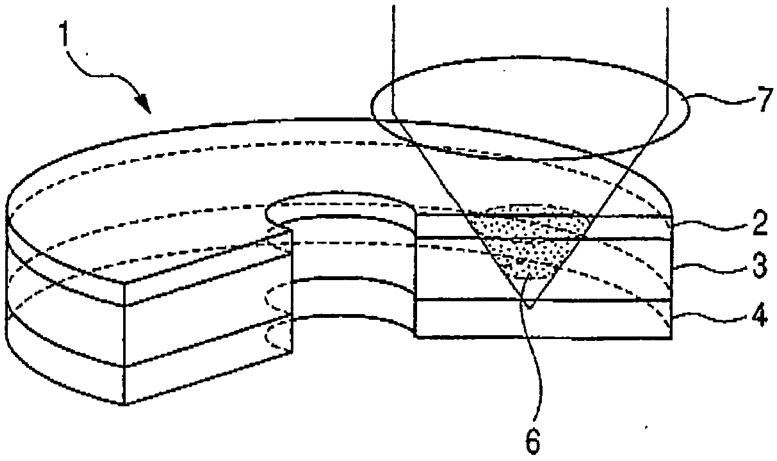


FIG. 8

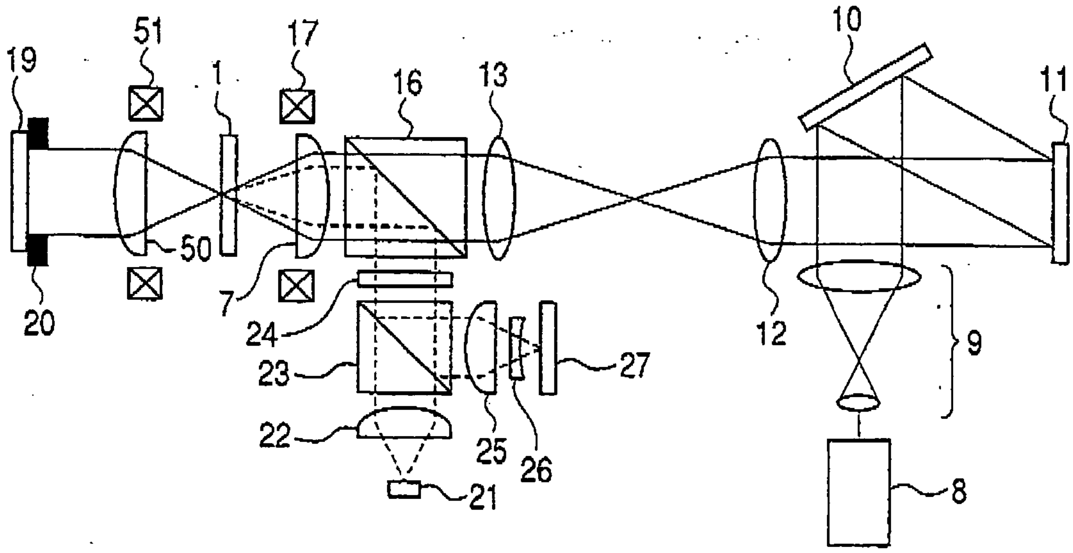

FIG. 9

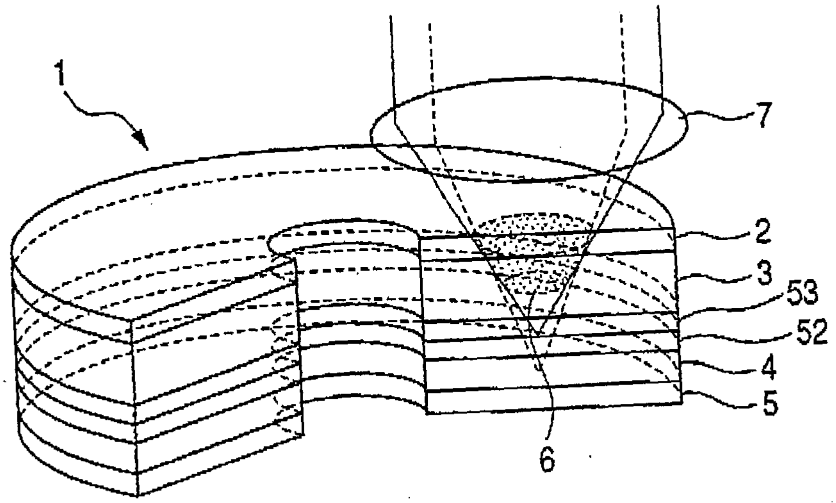
1
7
2
3
53
52
4
5
6

FIG. 10

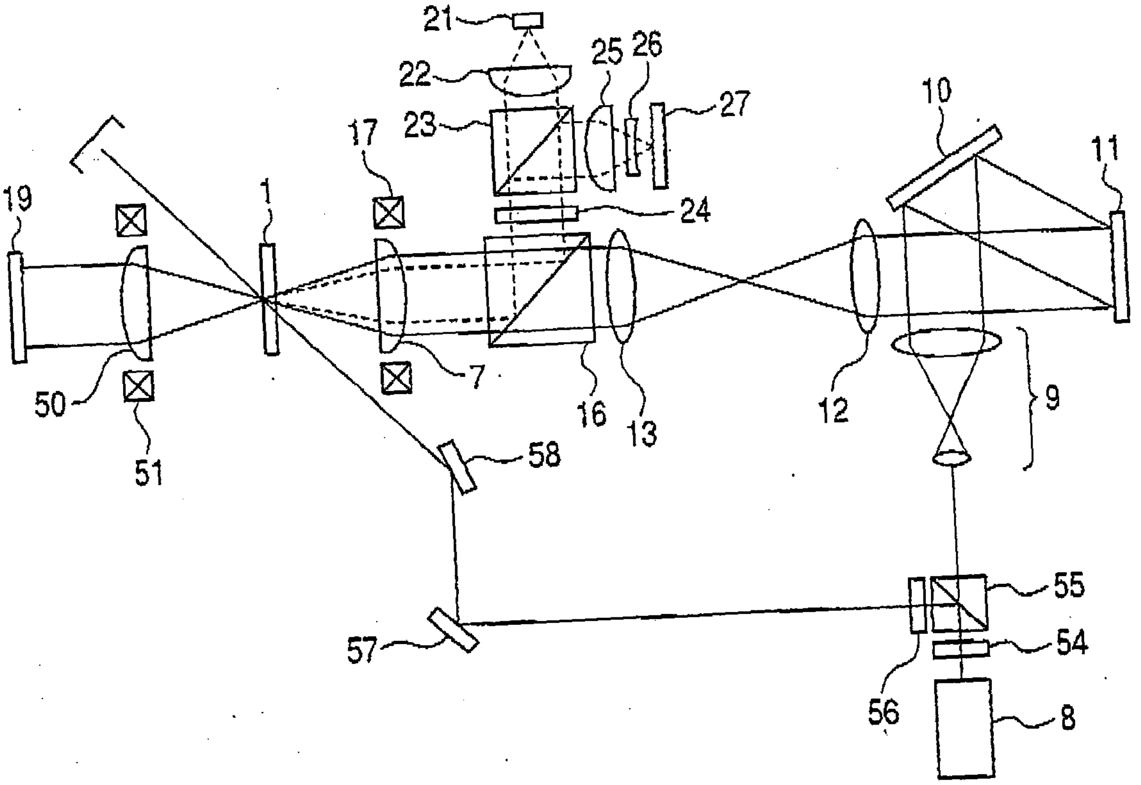
21
22
25
26
23
27
10
17
11
19
1
24
50
7
16
13
12
9
51
58
55
57
54
56
8

FIG. 11

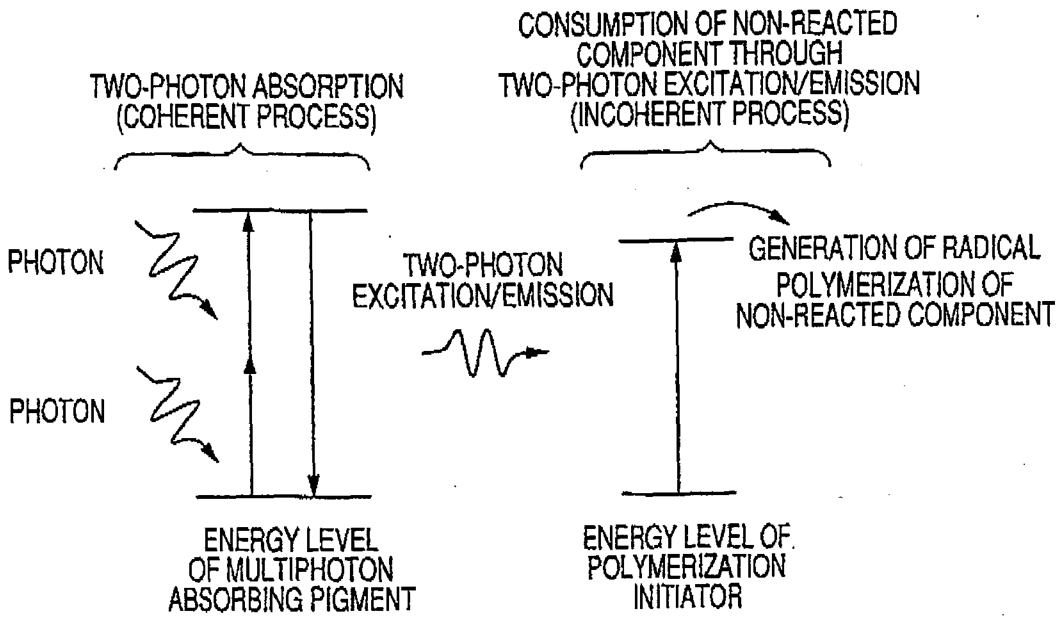
TWO-PHOTON ABSORPTION
(COHERENT PROCESS)
CONSUMPTION OF NON-REACTED
COMPONENT THROUGH
TWO-PHOTON EXCITATION/EMISSION
(INCOHERENT PROCESS)
PHOTON
PHOTON
TWO-PHOTON
EXCITATION/EMISSION
GENERATION OF RADICAL
POLYMERIZATION OF
NON-REACTED COMPONENT
ENERGY LEVEL
OF MULTIPHOTON
ABSORBING PIGMENT
ENERGY LEVEL OF
POLYMERIZATION
INITIATOR

FIG. 12

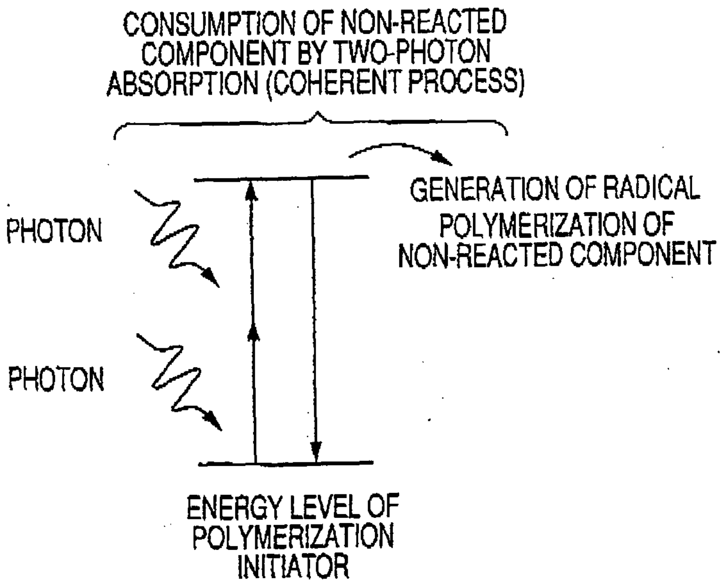
CONSUMPTION OF NON-REACTED
COMPONENT BY TWO-PHOTON
ABSORPTION (COHERENT PROCESS)
PHOTON
PHOTON
GENERATION OF RADICAL
POLYMERIZATION OF
NON-REACTED COMPONENT
ENERGY LEVEL OF
POLYMERIZATION
INITIATOR

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2006159500 A
- JP 11352303 A
- JP 2002123949 A

### Non-patent literature cited in the description

- **HIDEYUKI HORIMAI ; KUN LI.** A Novel Collinear Optical Setup for Holographic Data Storage System. *Technical Digest Of Optical Data Storage Topical Meeting 2004,* 2004, 258-260